(19) Europäisches Patentamt
European Patent Office
Office européen des brevets

(11) EP 1 212 753 B1

(12) EUROPEAN PATENT SPECIFICATION

(45) Date of publication and mention of the grant of the patent:
**25.10.2006 Bulletin 2006/43**

(21) Application number: **00952373.9**

(22) Date of filing: **01.08.2000**

(51) Int Cl.:
***G11B 7/24*** *(2006.01)*

(86) International application number:
**PCT/US2000/020985**

(87) International publication number:
**WO 2001/016950 (08.03.2001 Gazette 2001/10)**

# (54) HIGH DATA DENSITY OPTICAL MEDIA DISCS

OPTSCHE MEDIAPLATTEN MIT HOHER DATENDICHTE

DISQUES OPTIQUES POSSEDANT UNE DENSITE ELEVEE DE DONNEES

(84) Designated Contracting States:
**AT BE CH CY DE DK ES FI FR GB GR IE IT LI LU MC NL PT SE**

(30) Priority: **27.08.1999 US 151146 P**

(43) Date of publication of application:
**12.06.2002 Bulletin 2002/24**

(73) Proprietor: **DOW GLOBAL TECHNOLOGIES INC.**
**Midland, Michigan 48674 (US)**

(72) Inventors:
- **HAHNFELD, Jerry, L.**
  **Midland, MI 48642 (US)**
- **PARSONS, Gary, D.**
  **Midland, MI 48642 (US)**
- **JONES, Mary, Ann**
  **Midland, MI 48640 (US)**

(74) Representative: **Raynor, John**
**Beck Greener**
**Fulwood House,**
**12 Fulwood Place,**
**London WC1V 6HR (GB)**

(56) References cited:
**EP-A- 0 410 468** **EP-A- 0 505 110**
**WO-A-99/17285**

- **PATENT ABSTRACTS OF JAPAN vol. 015, no. 313 (C-0857), 9 August 1991 (1991-08-09) & JP 03 115349 A (MITSUBISHI KASEI CORP), 16 May 1991 (1991-05-16)**
- **PATENT ABSTRACTS OF JAPAN vol. 1996, no. 07, 31 July 1996 (1996-07-31) & JP 08 072405 A (MITSUBISHI CHEM CORP), 19 March 1996 (1996-03-19)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to optical media discs.

Optical media discs typically comprise a plastic substrate(s) which holds laser readable data and have been traditionally produced from polycarbonate resins. Such discs include compact discs, video discs, DVD discs, CD-rawriteable discs, optical magnetic discs and optical cards. The capacity of the disc to hold Information is referred to as the data density. Typical data densities of the polycarbonate discs of the current art are less than 5 Gigabytes per substrate layer in prerecorded formats, wherein several substrate layers can be combined to make a higher data density disc. However, polycarbonate has several disadvantages, Including the need for mold release agents in order to prevent pit deformation caused by adherence of the polymer to the nickel stamper used in disc production. The prevention of pit deformation becomes increasingly difficult at higher data densities and can cause reading errors. Additionally, polycarbonate has a high level of water absorbency, which causes dimensional instability or warping of the disc, thus requiring vapor barrier layers.

Data densities of greater than 5 Gigabytes per substrate layer have not been achieved in the current art due to a number of problems, including poor pit replication, birefringence, dimensional stability, resin processability and mold release.

Therefore, there remains a need for higher data density optical media discs having good pit replication, low birefringence, good dimensional stability, resin processability and mold release properties.

The present invention is a high data density pre-recorded optical media disc comprising at least one disc layer produced from a polymer composition comprising a hydrogenated vinyl aromatic/conjugated diene block copolymer having a glass transition temperature (Tg) of greater than 110°C as measured by Differential Scanning Calorimetry (DSC) at 10°C/min., an elastic modulus (G') of less than 1000 dynes/$cm^2$. at a temperature of 240°C as measured by Dynamic Mechanical Spectroscopy measurements at a temperature ramp rate of 3°C/min., and a shear rate of 1 radian/sec using a parallel plate geometry (under nitrogen), and a complex viscosity (Eta*) of less than 2000 poise as measured according to Dynamic Mechanical Spectroscopy measurements, using shear rate sweeps at 280°C, and a shear rate of 1 radian/sec using a parallel plate geometry (under nitrogen), and each disc layer has a retardation, measured by placing the molded disc substrate between crossed polarizers and quarter wave plates (oriented in opposition) of less than 25 nm per 0.6 mm substrate thickness (measured using light from a laser having a wavelength of 633 nm) and a water absorbance of less than 0.5% as measured according to ASTM D570, wherein the disc has a data density of at least 7.5 Gigabytes per disc layer or 0.17 Gigabytes per square cm (Gb/$cm^2$) per substrate surface or layer and a degree of replication such that the average pit depth equals 1/4 to 1/8 times $\lambda/v$ wherein $\lambda$ is the wavelength of a blue reader laser used for pit depth assessment and is from 380 to 410 nm and $\nu$ is the refractive index of the disc.

Another aspect of the present invention is a high data density rewritable optical media disc having a data density of at least 0.05 Gb/$cm^2$, wherein at least 75 percent replication is achieved as measured by a combination of grooves height and left and right sidewall angles, and wherein the disc has a retardation of less than 25 nm per 0.6 mm substrate thickness, and a water absorbance of less than 0.5 percent as measured according to ASTM D570.

The discs of the present invention are unique in the combination of their high data density and excellent properties including low birefringence, high transparency, low water absorption, good dimensional stability, and excellent surface replication.

High data density, in the case of pre-recorded formats, refers to a capacity of at least 0.17 Gb/$cm^2$ per substrate surface or layer. The data density is the data storage capacity per square area of a substrate layer. Generally, the data density will be at least 0.2, typically at least 0.22, advantageously at least 0.24, preferably at least 0.26, more preferably at least 0.27, even more preferably at least 0.28, and most preferably at least 0.3 Gb/$cm^2$, per substrate surface or layer. In a preferred embodiment, two or more layers can be combined to form a single disc having increased data density due to the accumulated data densities of the layers.

The rewritable optical media disc has a data density of at least 0.05 Gb/$cm^2$, preferably at least 0.06, preferably at least 0.07, more preferably at least 0.075, and most preferably at least 0.08 Gb/$cm^2$. Rewriteable discs comprise a polymer substrate which has a series of tracks or grooves molded into the surface where information can be deposited.

The amount of data density refers to the data density as measured only over the data containing area of the disc. Methods of measuring data density are well known in the art.

Replication is important in pre-recorded optical media discs In that insufficient replication will render the disc unreadable. Therefore, the replication must be sufficient such that the disc is readable or writeable. Typically, this is achieved by obtaining a pit depth equal to n times the wavelength of the reader laser used, divided by the refractive index of the substrate material, represented by the formula:

Pit depth = n x (wavelength/refractive index).

For adequate replication in such formats, n is typically between 1/4 and 1/8, preferably between 1/4 and 1/7 and most preferably between 1/4 and 1/6. The laser used in reading discs of such high densities can be a laser having a wavelength of less than 630 nm and is typically a blue laser having a wavelength of from 380 to 410 nm. This information

is well understood by those skilled in the art and disclosed the Compact Disc Handbook, 2nd Edition, by Pohlmann, pg. 55. This relationship described is necessary in order to translate encoded information on the disc to a bit stream thus making the disc readable.

Typically, at least 75 percent, preferably at least 80 percent, more preferably at least 85 percent and most preferably at least 90 percent replication is achieved in the high density optical media discs of the present invention. Replication refers to a process by which pits and/or a groove (surface features) are manufactured in the disc from a stamper. A stamper is a type of mold which contains the pit design carrying information in the case of pre-recorded discs or the groove design capable of holding information in the case of a rewriteable disc. Stampers used for pre-recorded discs contain columns having specified height, and left and right sidewall angles. The sidewall angle refers to the draft angle of the stamper surface feature(s). A column of the stamper forms a pit within the disc having a pit depth near or equal to the column height of the stamper and pit sidewall angles near or equal to the column draft angles. For rewritable discs, the stampers contain a surface feature capable of producing a groove having a specified groove depth, left and right draft angles as described previously. Replication for rewritable discs can best be distinguished by the successful transfer of groove height and sidewall angles from the stamper to the disc. Preferably, high replication is achieved as measured by the pit or groove depth and the left and right sidewall angles. In other words, the pit or groove depth and sidewall angles are at least a value which is 75 percent of the value measured In the stamper.

Methods of measuring pit depth, sidewall angles and general disc geography are well known by those in the art and include Atomic Force Microscopy.

The high data density optical media disc of the present invention has a retardation of less than 25 nm per 0.6 mm substrate (birefringence of less than 0.000042), and a water absorbance of less than 0.05% as measured according to ASTM D 570. Retardation is measured by placing a molded DVD disc substrate between crossed polarizers and quarter wave plates (oriented in opposition). The retardation is measured 20 mm from the injection gate of the disc using light from a 633 nm laser. Transmitted intensity is measured and the retardation calculated using the following formula:

$$I = I0 \sin2((\pi/\lambda(\Delta nd))$$

where Retardation = $\Delta nd$

Measured intensity = I
Incident intensity = I0
Wavelength = $\lambda$

The birefringence is calculated from the measured retardation by dividing retardation by the thickness of the substrate. Preferably the retardation is less than 20 nm, more preferably less than 15 nm and most preferably less than 10 nm in a disc substrate which is 0.6 mm thick. The water absorbance is preferably less than 0.04 percent, more preferably less than 0.02 percent and most preferably less than 0.01 percent.

The discs of the present invention can be produced from any polymer which will successfully produce a high data density disc having the aforementioned properties, wherein the polymer also has:

a glass transition temperature (Tg) of greater than 110°C as measured by Differential Scanning Calorimetry (DSC) at 10°C/min.,
an elastic modulus (G') of less than or equal to 1000 dynes/cm$^2$ at a temperature of 240°C, preferably at 225°C, more preferably at 215°C and most preferably at 210°C, as measured by Dynamic Mechanical Spectroscopy measurements at a temperature ramp rate of 3°C/min., and a shear rate of 1 radian/see using a parallel plate geometry (under nitrogen), and
a complex viscosity (Eta*) of less than 2000 poise, preferably less than 1300 poise, and more preferably less than 600 poise, as measured according to Dynamic Mechanical Spectroscopy measurements, using shear rate sweeps at 280°C, and a shear rate of 1 radian/see using a parallel plate geometry (under nitrogen).

These properties are necessary in order to achieve successful replication. If these properties are not achieved, the pit(s) or groove cannot be adequately formed and will not have the integrity required at such data densities.

The high density optical media disc of the present invention is typically produced from a material which is additionally substantially transparent. The transparency of the material should be such that the light transmittance of the disc substrate at a wavelength of greater than 390 nm to 700 nm is greater than 80 percent.

Polymers which can be used in producing the discs of the present invention include saturated hydrocarbon thermoplastics. The term saturated refers to the amount of olefinic bonds within the chemical structure. As used herein,

saturated refers to a polymer wherein less than 10 percent of the carbon-carbon bonds are olefinic or unsaturated in nature, preferably less than 7.5 percent, more preferably less than 5 percent, even more preferably less than 2 percent, and most preferably less than 1.5 percent. These types of polymers include hydrogenated aromatic/conjugated diene block copolymers, cyclic-olefin-copolymers and hydrogenated ring opening metathesis polymers and blends thereof.

Aromatic/conjugated diene block copolymers include block copolymers of a vinyl aromatic monomer and a conjugated diene monomer. The vinyl aromatic monomer is typically a monomer of the formula:

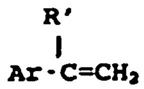

wherein R' is hydrogen or alkyl, Ar is phenyl, halophenyl, alkylphenyl, alkylhalophenyl, naphthyl, pyridinyl, or anthracenyl, wherein any alkyl group contains 1 to 6 carbon atoms which may be mono or multisubstituted with functional groups such as halo, nitro, amino, hydroxy, cyano, carbonyl and carboxyl. More preferably Ar is phenyl or alkyl phenyl with phenyl being most preferred. Typical vinyl aromatic monomers include styrene, alpha-methylstyrene, all isomers of vinyl toluene, especially paravinyltoluene, all isomers of ethyl styrene, propyl styrene, butyl styrene, vinyl biphenyl, vinyl naphthalene, vinyl anthracene and the like, and mixtures thereof. Block copolymers containing 5 or more blocks can contain more than one specific polymerized vinyl aromatic monomer. In other words, for example, a pentablock copolymer can contain a polystyrene block and a poly-alpha-methylstyrene block. The hydrogenated vinyl aromatic polymer block may also be a copolymer of a vinyl aromatic wherein the vinyl aromatic portion is at least 50 weight percent of the copolymer. Preferably, the vinyl aromatic polymer block is a styrene polymer block.

The conjugated diene monomer can be any monomer having two conjugated double bonds. Such monomers include for example 1,3-butadiene, 2-methyl-1,3-butadiene, 2-methyl-1,3 pentadiene, isoprene and similar compounds, and mixtures thereof. Preferably, the conjugated diene is a butadiene.

The conjugated diene polymer block can be prepared from materials which remain amorphous after the hydrogenation process, or materials which are capable of crystallization after hydrogenation. Hydrogenated polyisoprene blocks remain amorphous, while hydrogenated polybutadiene blocks can be either amorphous or crystallizable depending upon their structure. Polybutadiene can contain either a 1,2 configuration, which hydrogenates to give the equivalent of a 1-butene repeat unit, or a 1,4-configuration, which hydrogenates to give the equivalent of an ethylene repeat unit. Polybutadiene blocks having at least approximately 40 weight percent 1,2-butadiene content, based on the weight of the polybutadiene block, provides substantially amorphous blocks with low glass transition temperatures upon hydrogenation. Polybutadiene blocks having less than approximately 40 weight percent 1,2-butadiene content, based on the weight of the polybutadiene block, provide crystalline blocks upon hydrogenation. It may be desirable to incorporate a crystalline block (to improve solvent resistance) or an amorphous, more compliant block. One way of achieving low birefringence is in the control of the 1,2 to 1,4 content of the polybutadiene block. In one embodiment, the weight ratio of 1,2 to 1,4 content of the polybutadiene block is greater than 20:80, generally greater than 25:75, preferably greater than 30:70, and more preferably greater than 35:65. In cases where the weight ratio of 1,2 to 1,4 content of the polybutadiene block is 1:5 or less, the birefringence can be controlled by incorporating a hydrogenated polybutadiene polymer block having generally 120 monomer units or less, typically 115 monomer units or less, characteristically 110 monomer units or less, preferably 105 monomer units or less, more preferably 95 monomer units or less, even more preferably 90 monomer units or less and most preferably 85 monomer units or less.

In some applications, the block copolymer can contain more than one conjugated diene polymer block, such as a polybutadiene block and a polyisoprene block. The conjugated diene polymer block may also be a copolymer of a conjugated diene, wherein the conjugated diene portion of the copolymer is at least 50 weight percent of the copolymer.

Other polymeric blocks may also be included in the vinyl aromatic/conjugated diene block copolymers.

A block is herein defined as a polymeric segment of a copolymer which exhibits microphase separation from a structurally or compositionally different polymeric segment of the copolymer. Microphase separation occurs due to the incompatibility of the polymeric segments within the block copolymer. Microphase separation and block copolymers are widely discussed in "Block Copolymers-Designer Soft Materials", PHYSICS TODAY, February, 1999, pages 32-38.

The hydrogenated block copolymers typically contain from 65 to 90 weight percent of a hydrogenated vinyl aromatic polymer, for example, polyvinylcyclohexane or PVCH block, preferably from 70, more preferably from 75, to 90 weight percent, preferably to 85, based on the total weight of the hydrogenated block copolymer.

The hydrogenated block copolymers of the present invention typically contain from 10 to 35 weight percent of a hydrogenated conjugated diene polymer block, preferably from 12, to 30 weight percent, preferably to 25, more preferably to 20, based on the total weight of the copolymer.

The hydrogenated block copolymers are produced by the hydrogenation of block copolymers including triblock,

multiblock, tapered block, and star block copolymers such as SBS, SBSBS, SIS, SISIS, and SISBS (wherein S is polystyrene, B is polybutadiene and I is polyisoprene). The block copolymers contain at least one triblock segment comprised of a vinyl aromatic polymer block on each end. The block copolymers may, however, contain any number of additional blocks, wherein these blocks may be attached at any point to the triblock polymer backbone. Thus, linear blocks would indude for example SBS, SBSB, SBSBS, and SBSBSB. The copolymer can also be branched, wherein polymer chains are attached at any point along the copolymer backbone.

The total number average molecular weight ($Mn_t$) of the hydrogenated block copolymers is typically from 30,000, preferably from 32,000, more preferably from 35,000 and most preferably from 40,000 to 70,000, preferably to 68,000, more preferably to 65,000. Number average molecular weight (Mn) as referred to throughout this application is determined using gel permeation chromatography (GPC). The molecular weight of the hydrogenated block copolymer and properties obtained are dependent upon the molecular weight of each of the hydrogenated polymeric blocks. It has been discovered that by optimizing the molecular weight of the hydrogenated polymeric blocks, hydrogenated block copolymers of low molecular weight (30,000 to 70,000) can achieve high heat distortion temperatures and excellent toughness and tensile strength properties. Surprisingly, we have found that good physical properties can be obtained at relatively low hydrogenated block copolymer molecular weights which gives superior processability.

Methods of making block copolymers are well known in the art. Typically, block copolymers are made by anionic polymerization, examples of which are cited in <u>Anionic Polymerization: Principles and Practical Applications,</u> H.L Hsieh and R.P. Quirk, Marcel Dekker, New York, 1996. In one embodiment, block copolymers are made by sequential monomer addition to a carbanionic initiator such as sec-butyl lithium or n-butyl lithium. In another embodiment, the copolymer is made by coupling a triblock material with a divalent coupling agent such as 1,2-dibromoethane, dichlorodimethylsilane, or phenylbenzoate. In this embodiment, a small chain (less than 10 monomer repeat units) of a conjugated diene polymer can be reacted with the vinyl aromatic polymer coupling end to facilitate the coupling reaction. Vinyl aromatic polymer blocks are typically difficult to couple, therefore, this technique is commonly used to achieve coupling of the vinyl aromatic polymer ends. The small chain of diene polymer does not constitute a distinct block since no microphase separation is achieved. Coupling reagents and strategies which have been demonstrated for a variety of anionic polymerizations are discussed in Hsieh and Quirk. Chapter 12, pgs. 307-331. In another embodiment, a difunctional anionic initiator is used to initiate the polymerization from the center of the block system, wherein subsequent monomer additions add equally to both ends of the growing polymer chain. An example of a such a difunctional initiator is 1,3-bis(1-phenylethenyl) benzene treated with organolithium compounds, as described in U.S. Patents 4,200,718 and 4,196,154.

After preparation of the block copolymer, the copolymer is hydrogenated to remove sites of unsaturation in both the conjugated diene polymer block and the vinyl aromatic polymer block segments of the copolymer. Any method of hydrogenation can be used and such methods typically include the use of metal catalysts supported on an Inorganic substrate, such as Pd on $BaSO_4$ (U.S. Patent 5,352,744) and Ni on kieselguhr (U.S. Patent 3,333,024). Additionally, soluble, homogeneous catalysts such those prepared from combinations of transition metal salts of 2-ethylhexanoic acid and alkyl lithiums can be used to fully saturate block copolymers, as described in Die Makromolekulare Chemie. Volume 160, pp. 291, 1972. The copolymer hydrogenation can also be achieved using hydrogen and a heterogeneous catalyst such as those described in U.S. patents 5,352,744, U.S. 5,612422 and U.S. 5,645,253. The catalysts described therein are heterogeneous catalysts consisting of a metal crystallite supported on a porous silica substrate. An example of a silica supported catalyst which is especially useful in the polymer hydrogenation is a silica which has a surface area of at least 10 $m^2/g$ and which is synthesized such that it contains pores with diameters ranging between 3000 and 6000 angstroms. This silica is then impregnated with a metal capable of catalyzing hydrogenation of the polymer, such as nickel, cobalt, rhodium, ruthenium, palladium, platinum, other Group VIII metals, combinations or alloys thereof. Other heterogeneous catalysts can also be used, having diameters in the range of 500 to 3,000 angstroms.

Alternatively, the hydrogenation can be conducted in the presence of a mixed hydrogenation catalyst characterized in that it comprises a mixture of at least two components. The first component comprises any metal which will increase the rate of hydrogenation and includes nickel, cobalt, rhodium, ruthenium, palladium, platinum, other Group VIII metals, or combinations thereof. Preferably rhodium and/or platinum is used. However, platinum is known to be a poor hydrogenation catalyst for nitriles, therefore, platinum would not be preferred in the hydrogenation of nitrile copolymers. The second component used in the mixed hydrogenation catalyst comprises a promoter which inhibits deactivation of the Group VIII metal(s) upon exposure to polar materials, and is herein referred to as the deactivation resistant component. Such components preferably comprise rhenium, molybdenum, tungsten, tantalum or niobium or mixtures thereof.

The amount of the deactivation resistant component is at least an amount which significantly inhibits the deactivation of the Group VIII metal component when exposed to polar impurities within a polymer composition, herein referred to as a deactivation inhibiting amount. Deactivation of the Group VIII metal is evidenced by a significant decrease in hydrogenation reaction rate. This is exemplified in comparisons of a mixed hydrogenation catalyst and a catalyst containing only a Group VIII metal component under Identical conditions in the presence of a polar impurity, wherein the catalyst containing only a Group VIII metal component exhibits a hydrogenation reaction rate which is less than 75

percent of the rate achieved with the mixed hydrogenation catalyst.

Preferably, the amount of deactivation resistant component is such that the ratio of the Group VIII metal component to the deactivation resistant component is from 0.5:1 to 10:1, more preferably from 1:1 to 7:1, and most preferably from 1:1 to 5:1.

The catalyst can consist of the components alone, but preferably the catalyst additionally comprises a support on which the components are deposited. In one embodiment, the metals are deposited on a support such as a silica, alumina or carbon. In a more specific embodiment, a silica support having a narrow pore size distribution and surface area greater than 10 meters squared per gram ($m^2/g$) is used.

The pore size distribution, pore volume, and average pore diameter of the support can be obtained via mercury porosimetry following the proceedings of ASTM D-4284-83.

The pore size distribution is typically measured using mercury porosimetry. However, this method is only sufficient for measuring pores of greater than 60 angstroms. Therefore, an additional method must be used to measure pores less than 60 angstroms. One such method is nitrogen desorption according to ASTM D-4641-87 for pore diameters of less than about 600 angstroms. Therefore, narrow pore size distribution is defined as the requirement that at least 98 percent of the pore volume is defined by pores having pore diameters greater than 300 angstroms and that the pore volume measured by nitrogen desorption for pores less than 300 angstroms, be less than 2 percent of the total pore volume measured by mercury porosimetry.

The surface area can be measured according to ASTM D-3663-84. The surface area is typically between 10 and 100 $m^2/g$, preferably between 15 and 90 with most preferably between 50 and 85 $m^2/g$.

The desired average pore diameter is dependent upon the polymer which is to be hydrogenated and its molecular weight (Mn). It is preferable to use supports having higher average pore diameters for the hydrogenation of polymers having higher molecular weights to obtain the desired amount of hydrogenation. For high molecular weight polymers (Mn>200,000 for example), the typical desired surface area can vary from 15 to 25 $m^2/g$ and the desired average pore diameter from 3,000 to 4000 angstroms. For lower molecular weight polymers (Mn<1 00,000 for example), the typical desired surface area can vary from 45 to 85 $m^2/g$ and the desired average pore diameter from 300 to 700 angstroms.

Silica supports are preferred and can be made by combining potassium silicate in water with a gelation agent, such as formamide, polymerizing and leaching as exemplified in U.S. Patent No. 4,112,032. The silica is then hydrothermally calcined as in Iler, R.K., The Chemistry of Silica, John Wiley and Sons, 1979, pp. 539-544, which generally consists of heating the silica while passing a gas saturated with water over the silica for about 2 hours or more at temperatures from 600°C to 850°C. Hydrothermal calcining results in a narrowing of the pore diameter distribution as well as increasing the average pore diameter. Alternatively, the support can be prepared by processes disclosed in iler, R.K, The Chemistry of Silica, John Wiley and Sons, 1979, pp. 510-581.

A silica supported catalyst can be made using the process described in U.S. Patent No. 5,110,779. An appropriate metal, metal component, metal containing compound or mixtures thereof, can be deposited on the support by vapor phase deposition, aqueous or nonaqueous impregnation followed by calcination, sublimation or any other conventional method, such as those exemplified in Studies in Surface Science and Catalysis, "Successful Design of Catalyst" V. 44, pg. 146-158, 1989 and Applied Heterogeneous Catalysis pgs. 75-123, Institute Français du Pétrole Publications. 1987. In methods of impregnation, the appropriate metal containing compound can be any compound containing a metal, as previously described, which will produce a usable hydrogenation catalyst which is resistant to deactivation. These compounds can be salts, coordination complexes, organometallic compounds or covalent complexes.

Typically, the total metal content of the supported catalyst is from 0.1 to 10 wt. percent based on the total weight of the silica supported catalyst. Preferable amounts are from 2 to 8 wt. percent, more preferably 0.5 to 5 wt. percent based on total catalyst weight.

Promoters, such as alkali, alkali earth or lanthanide containing compounds, can also be used to aid in the dispersion of the metal component onto the silica support or stabilization during the reaction, though their use is not preferred.

The amount of supported catalyst used in the hydrogenation process is much smaller than the amount required in conventional unsaturated polymer hydrogenation reactions due to the high reactivity of the hydrogenation catalysts. Generally, amounts of less than 1 gram of supported catalyst per gram of unsaturated polymer are used, with less than 0.1 gram being preferred and less than 0.05 being more preferred. The amount of supported catalyst used is dependent upon the type of process, whether it is continuous, semi-continuous or batch, and the process conditions, such as temperature, pressure and reaction time wherein typical reaction times may vary from 5 minutes to 5 hours. Continuous operations can typically contain 1 part by weight supported catalyst to 200,000 or more parts unsaturated polymer, since the supported catalyst is reused many times during the course of continuous operation. Typical batch processes can use 1 part by weight supported catalyst to 5,000 parts unsaturated polymer. Higher temperatures and pressures will also enable using smaller amounts of supported catalyst.

The hydrogenation reaction can be conducted in the absence of a solvent but is preferably conducted in a hydrocarbon solvent in which the polymer is soluble and which will not hinder the hydrogenation reaction. Preferably

the solvent is a saturated solvent such as cyclohexane, methylcyclohexane, ethylcyclohexane, cyclooctane, cycloheptane, dodecane, dioxane, diethylene glycol dimethyl ether, tetrahydrofuran, isopentane, decahydronaphthalene or mixtures thereof, with cyclohexane being the most preferred.

The temperature at which the hydrogenation is conducted can be any temperature at which hydrogenation occurs without significant degradation of the polymer. Degradation of the polymer can be detected by a decrease in Mn, an increase in polydispersity or a decrease in glass transition temperature, after hydrogenation. Significant degradation in polymers having a polydispersity between 1.0 and 1.2 can be defined as an increase of 30 percent or more in polydispersity after hydrogenation. Preferably, polymer degradation is such that less than a 20 percent increase in polydispersity occurs after hydrogenation, most preferably less than 10 percent. In polymers having polydispersity greater than about 1.2, a significant decrease in molecular weight after hydrogenation indicates that degradation has occurred. Significant degradation in this case is defined as a decrease in Mn of 20 percent or more. Preferably, a Mn decrease after hydrogenation will be less than 10 percent. However, polymers such as poly-alpha-methylstyrene or other alpha substituted vinyl aromatic polymers which are more prone to polymer degradation, can tolerate a decrease in Mn of up to 30 percent.

Typical hydrogenation temperatures are from 40°C preferably from 100°C, more preferably from 110°C, and most preferably from 120°C to 250°C, preferably to 200°C, more preferably to 180°C, and most preferably to 170°C. The pressure of the hydrogenation reaction is not critical, though hydrogenation rates increase with increasing pressure. Typical pressures range from atmospheric pressure to 70 MPa, with 0.7 to 10.3 MPa being preferred.

The reaction vessel is purged with an inert gas to remove oxygen from the reaction area. Inert gases include but are not limited to nitrogen, helium, and argon, with nitrogen being preferred.

The hydrogenating agent can be any hydrogen producing compound which will efficiently hydrogenate the unsaturated polymer. Hydrogenating agents include but are not limited to hydrogen gas, hydrazine and sodium borohydride. In a preferred embodiment, the hydrogenating agent is hydrogen gas.

The amount of olefinic hydrogenation can be determined using Infrared or proton NMR techniques. The amount of aromatic hydrogenation can be measured using UV-VIS spectroscopy. Cyclohexane solutions of polystyrene give a very distinct absorption band for the aromatic ring at about 260.5 nm. This band gives an absorbance of 1.000 with a solution concentration of .004980 moles of aromatic per liter in a 1 cm cell. After removing the catalyst via filtration (using a 0.50 micrometer (μm) "TEFLON™" filter, Millipore FHUP047) the reaction mixture is placed in a UV cell and the absorbance measured. The absorbance is dependent upon concentration. The hydrogenated polymer products are typically measured at higher concentrations since they are not diluted before the absorbance is measured. Since the reaction solution is about 15 to 30 times more concentrated than the standards, small amounts of residual unsaturation can be accurately measured.

The level of hydrogenation of the block copolymer is preferably greater than 95 percent of the conjugated diene polymer block and greater than 90 percent of the vinyl aromatic polymer block segments, more preferably greater than 99 percent of the conjugated diene polymer block and greater than 95 percent of the vinyl aromatic polymer block segments, even more preferably greater than 99.5 percent of the conjugated diene polymer block and greater than 98 percent of the vinyl aromatic polymer block segments, and most preferably greater than 99.9 percent of the conjugated diene polymer block and 98.5 percent of the vinyl aromatic polymer block segments. The term 'level of hydrogenation' refers to the percentage of the original unsaturated bonds which become saturated upon hydrogenation. The level of hydrogenation in hydrogenated vinyl aromatic polymers is determined using UV-VIS spectrophotometry, while the level of hydrogenation in hydrogenated diene polymers is determined using proton NMR.

Additionally, blends of different hydrogenated vinyl aromatic/conjugated diene block copolymers can be used to produce the high density discs of the present invention.

Cyclic-olefin-copolymers are copolymerized cycloolefin monomers with other acyclic or cyclic olefin comonomers. Cyclic-olefin-copolymers include norbomene-type polymers as described in U.S. Patent Nos. 5,115,041, 5,142,007, 5,143,979. The cycloolefin moiety may be substituted or unsubstituted. Suitable cycloolefin monomers include substituted and unsubstituted norbornenes, dicyclopentadienes, dihydrodicyclopentadienes, trimers of cyclopentadiene, tetracyclododecenes, hexacycloheptadecenes, ethylidenyl norbomenes and vinylnorbomenes. Substituents on the cycloolefin monomers include hydrogen, alkyl alkenyl, and aryl groups of 1 to 20 carbon atoms and saturated and unsaturated cyclic groups of 3 to 12 carbon atoms which can be formed with one or more, preferably two, ring carbon atoms. Generally speaking, the substituents on the cycloolefin monomers can be any which do not poison or deactivate the polymerization catalyst. Examples of preferred monomers include but are not limited to dicyclopentadiene, methyltetracydododecene, 2-norbomene, and other norbomene monomers such as 5-methyl-2-norbomene, 5,6-dimethyl-2-norbomene, 5-ethyl-2-norbomene, 5-ethylidenyl-2-norbomene, 5-butyl-2-norbomene, 5-hexyl-2-norbomene, 5-octyl-2-norbomene, 5-phenyl-2-norbomene, 5-dodecyl-2-norbomene, 5-isobutyl-2-norbomene, 5-octadecyl-2-norbomene, 5-isopropyl-2-norbornene, 5-p-toluyl-2-norbomene. 5-α-naphthyl-2-norbomene, 5-cydohexyl-2-norbomene, 5-isopropenyl-2-norbomene, 5-vinyl-2-norbomene, 5,5-dimethyl-2-norbomene, tricyclopentadiene (or cyclopentadiene trimer), tetracyclopentadiene (or cydopentadiene tetramer), dihydrodicydopentadiene (or cyclopentene-cyclopentadione co-dimer), methyl-cyclopentadiene

dimer, ethyl-cyclopentadiene dimer, tetracydododecene 9-methyl-tetracyclo[6,2,1,$1^{3,6}O^{2,7}$]dodecene-4, (or methyl-tetracyclododecene), 9-ethyl-tetracyclo[6,2,1,$1^{3,6}O^{2,7}$]dodecene-4, (or ethyl-tetracyclododecene), 9-hexyl-tetracyclo [6,2,1,$1^{3,6}O^{2,7}$]dodecene-4,9-decyl-tetracyclo-[6,2,1,$1^{3,6}O^{2,7}$]dodecene-4,9-decyl-tetracyclo[6,2,1,$1^{3,6}O^{2,7}$]dodecene-4,9,10-dimethyl-tetracyclo [6,2,1,$1^{3,8}O^{2,7}$] dodecene-4,9-methyl-10-ethyl-tetracyclo [6,2,1,$1^{3,6}O^{2,7}$] dodecene-4,9-cyclohexyl- tetracyclo-[6,2,$1^{3,6}O^{2,7}$] dodecene- 4,9- chloro- tetracyclo [6,2,1,$1^{3,6}O^{2,7}$] dodecene- 4,9- bromo- tetracyclo [6,2,1,$1^{3,6}O^{2,7}$] dodecene- 4,9- fluoro- tetracyclo-[6,2,1,$1^{3,6}O^{2,7}$] dodecene- 4,9- isobutyl- tetracyclo [6,2,1,$1^{3,6}O^{2,7}$] dodecone-4, and 9,10-dichloro tetracyclo[6,2,1,$1^{3,6}O^{2,7}$]dodecene-4. Acyclic olefin comonomers are typically olefins such as ethylene, and propylene.

Polymers comprising two or more different cyclic types of monomeric units are also suitable. For example, copolymers of methyltetra-cyclododecane (MTD) and methylnorbomene (MNB) are especially suitable. More preferably, the polymers comprise three or more different types of monomeric units, for example, terpolymers, including MTD, MNB and dicydopentadiene (DCPD).

Ring opening metathesis polymers include polymers prepared by metathesis ring opening (co)polymerization of a norbomene or tetracyclododecene, such as those described in JP-85/26,024 and U.S. Patent No. 5,053,471. Methods of hydrogenating such polymers are well known by those skilled in the art.

Other additives may also be included in the above identified polymer compositions including heat stabilizers, mold release agents, flow aids, UV stabilizers, and processing aids such as mineral oil. Polymer blends can also be used, such as blends of hydrogenated vinyl aromatic homopolymer blended with hydrogenated vinyl aromatic/conjugated diene block copolymer, and blends of different hydrogenated block copolymers.

Discs can be molded using any molding technique such as those described in The Compact Disc Handbook, 2nd edition, by Pohlmann.

Methods of molding optical media discs are well known in the art and include injectioncompression molding. A preferred method includes injection compression-molding as described in Injection Molding An Introduction, pgs. 171-172 Hanser/Gardner/ Publication, Inc., Cincinnati, 1995 by Potsch and Michaeli. Discs are molded using a stamper which 'transfers' the format specific surface features into the disc at the designated density. Format specific surface features include a pit in the case of pre-recorded formats and a groove which is capable of holding information in the case of rewritables. The stamper utilized will have a density of at least 7.5 Gb. High data densities in prerecorded formats can be achieved by numerous known methods including positioning surface features in closer relation to each other, decreasing the pit angle and obtaining multiple pit depths as well. One reason such discs have not been contemplated previously is that prior art materials require mold release agents and therefore would be even more difficult to use at higher densities or very low track pitches.

The following examples are provided to illustrate the present invention. The examples are not intended to limit the scope of the present invention and they should not be so interpreted. Amounts are in weight parts or weight percentages unless otherwise indicated.

EXAMPLES

I) Procedure for preparing Block Copolymer Sample 1

Sequential Polymerization of Pentablock Copolymer

A mixture of 386 Kg of cydohexane containing approximately 8 to 15 weight percent isopentane is added to a 1136 liter stirred reactor under nitrogen atmosphere. The reactor is blanked by adding 0.5 Kg of a cyclohexane solution which is 0.0979 molar in low molecular weight polystyryl lithium. To this mixture is added 1.08 liters of a 1.4M solution of sec-butyllithium in cyclohexane. The solution is heated to approximately 65°C and 22.6 Kg of styrene monomer is added, followed by a 34 Kg hydrocarbon solvent purge of the styrene line. After 20 minutes of polymerization, 11.3 Kg of butadiene monomer is added at a temperature of about 70°C, followed by 34 Kg of hydrocarbon solvent which is followed immediately by another styrene addition of 22.6 Kg. After another 20 minutes, a second addition of 11.3 Kg of butadiene is made at about 70°C, followed by a 34 Kg line flush with solvent. After another 20 minutes, the third addition of 22.6 Kg of styrene is made and the polymerization continues for a final 20 minutes. At this point 114 grams of 2-propanol is added to terminate the reaction.

Table 1

| Sample | Actual | Actual | Actual % Polystyrene | Actual % Polybutadiene | Actual % 1,2 |
|---|---|---|---|---|---|
| | Mp* | Mw/Mn | before hydrogenation | before hydrogenation | Content |

(continued)

| Sample | Actual | Actual | Actual % Polystyrene | Actual % Polybutadiene | Actual % 1,2 |
|---|---|---|---|---|---|
| 1 | 62000 | 1.03 | 71 | 29 | 11 |
| *Mp is peak Molecular weight. | | | | | |

The block copolymer is then hydrogenated such that all of the polybutadiene block and polystyrene blocks are completely saturated.

II) Hydrogenation

Approximately 20 grams of a dried block copolymer is dissolved in 700 mL cyclohexane. This polymer is hydrogenated using a Pt on $SiO_2$ hydrogenation catalyst as described in U.S. Patent No. 5,612,422. The polymer to catalyst ratio is 10 to 1. The hydrogenation reaction is conducted in a PPI (Precision Pressure Industry) reactor for 12 hours at 177°C under 3447 MPa hydrogen.

Table 2 shows a series of physical properties for the hydrogenated block copolymer. Mechanical properties are obtained using compression molded samples. Tensile properties are measured according to ASTM D638 using type 5 microtensile specimens at a crosshead speed of 0.127cm/min. and a 101.9 Kg load cell.

Table 2

| Sample. | Tensile Yield (MPa) | Tensile Rupture (MPa) | Tensile Modulus (MPa) | Complex Viscosity (poise) |
|---|---|---|---|---|
| 1 | 29.6 | 30.3 | 1,860 | 5.24 x 104 |

High Density DVD Example

A DVD substrate is injection compression molded from the hydrogenated block copolymer of Sample 1, using an injection/compression molding machine with a maximum clamping force 600kN, maximum injection stroke capability of 100mm and injection screw diameter of 32mm. The substrate mold is a DVD single cavity substrate mold. Optical discs are prepared using a data bearing stamper which is inserted into the mold and contains approximately 15 Gb of data, and track pitch of 0.4 to 0.5 microns. Process temperatures are melt temperatures of 290 to 330°C, and mold temperatures of 40 to 80°C. Injection velocity is varied from 25 mm/s to 200 mm/s, increasing as the mold is filled. Once filled, the part is further packed with polymer by applying initial hold pressure of approximately 300 bar which is then reduced to 0 bar over a period of 0.8 sec. The polymer injection shot size is approximately 13.5 mm to achieve a completely full part with an actual part thickness of 0.6 mm. The compression phase is accomplished by applying 55 to -65 percent clamp force to the injection mold at the time when approximately 85 percent of the polymer shot has been injected into the mold cavity. Prior to compression the mold cavity is typically between 1.0 and 1.2 mm thick. The overall cycle time for the process including part removal is 5 to 10 seconds. The DVD substrates are 120 mm in diameter and 0.6 mm thick.

Once molded, the DVD substrates are sputtered with an aluminum reflective layers. Two individual substrates are bonded together to form a dual layer 30 Gb disc.

## Claims

1. A high data density pre-recorded optical media disc comprising at least one disc layer produced from a polymer composition comprising a hydrogenated vinyl aromatic/conjugated diene block copolymer having a glass transition temperature (Tg) of greater than 110°C as measured by Differential Scanning Calorimetry (DSC) at 10°C/min., an elastic modulus (G') of less than 1000 dynes/$cm^2$ at a temperature of 240°C as measured by Dynamic Mechanical Spectroscopy measurements at a temperature ramp rate of 3°C/min., and a shear rate of 1 radian/sec using a parallel plate geometry (under nitrogen), and a complex viscosity (Eta*) of less than 2000 poise as measured according to Dynamic Mechanical Spectroscopy measurements, using shear rate sweeps at 280°C, and a shear rate of 1 radian/sec using a parallel plate geometry (under nitrogen), and each disc layer has a retardation, measured by placing the molded disc substrate between crossed polarizers and quarter wave plates (oriented in opposition) of less than 25 nm per 0.6 mm substrate thickness (measured using light from a laser having a wavelength of 633 nm) and a water absorbance of less than 0.5% as measured according to ASTM D570, wherein the disc has a data

density of at least 7.5 Gigabytes per disc layer or 0.17 Gigabytes per square cm ($Gb/cm^2$) per substrate surface or layer and a degree of replication such that the average pit depth equals 1/4 to 1/8 times $\lambda/\nu$ wherein $\lambda$ is the wavelength of a blue reader laser used for pit depth assessment and is from 380 to 410 nm and $\nu$ is the refractive index of the disc.

**2.** The disc of Claim 1 having a data density of at least 0.2 $Gb/cm^2$ per layer.

**3.** The disc of Claim 1, wherein the light transmittance of the disc is at least 80 percent at a wavelength of greater than 390 nm to 700 nm.

**4.** The disc of Claim 1, wherein the pit depth is equal to 1/4 to 1/6 times $\lambda/\nu$.

**5.** A high data density rewritable optical media disc having a data density of at least 0.05 $Gb/cm^2$, wherein at least 75 percent replication is achieved as measured by a combination of groove height and left and right sidewall angles, and wherein the disc has a retardation of less than 25 nm per 0.6 mm substrate thickness, and a water absorbance of less than 0.5 percent as measured according to ASTM D570.

**6.** The disc of Claim 5 having a data density of at least 0.08 $Gb/cm^2$.

**7.** The disc of Claim 5, wherein the light transmittance of the disc is at least 80 percent at a wavelength of greater than 390 nm to 700 nm.

**8.** The disc of Claim 1, wherein the retardation is less than 20 nm.

**9.** The optical media disc of Claim 1, wherein the block copolymer comprises at least two distinct blocks of hydrogenated polymerized vinyl aromatic monomer, herein referred to as hydrogenated vinyl aromatic polymer block, and at least one block of hydrogenated polymerized butadiene monomer, herein referred to as hydrogenated butadiene polymer block, wherein the hydrogenated block copolymer is **characterized by**:

1) a hydrogenation level such that each hydrogenated vinyl aromatic polymer block has a hydrogenation level of greater than 90 percent and each hydrogenated butadiene polymer block has a hydrogenation level of greater than 95 percent, and
2a) a weight ratio of 1,2 to 1,4 polybutadiene content of greater than 20:80, or
2b) a hydrogenated butadiene polymer block comprising 120 monomer units or less.

**10.** The disc of Claim 9, wherein the vinyl aromatic monomer is styrene.

**11.** The disc of Claim 9, wherein the butadiene polymer block has a weight ratio of 1,2 to 1,4 polybutadiene content of greater than 25:75.

**12.** The disc of Claim 11, wherein the weight ratio of 1,2 to 1,4 polybutadiene content is greater than 30:70.

**13.** The disc of Claim 9, wherein the vinyl aromatic/conjugated diene block copolymer comprises a hydrogenated isoprene polymer block.

**14.** The disc of Claim 1, wherein the polymer composition further comprises a cyclic olefin copolymer.

**15.** The disc of Claim 1, wherein the polymer composition further comprises a hydrogenated ring opening metathesis polymer.

**16.** A method of producing the high data density pre-recorded or rewritable optical media disc of any one of Claims 1 to 15, comprising compression injection molding a polymer composition as defined in Claim 1 or in any one of Claims 9 to 15, into a high density optical media disc.

## Patentansprüche

**1.** Bespielter optischer Datenträger mit hoher Datendichte, umfassend wenigstens eine Trägerschicht, die aus einer

Polymerzusammensetzung hergestellt ist, enthaltend ein hydriertes Blockcopolymer aus einem Vinylaromaten und einem konjugierten Dien mit einer Glasübergangstemperatur (Tg) von mehr als 110°C, wie durch Differenzial-Scanning-Kalorimetrie (DSC) bei 10°C/min gemessen, einem Elastizitätsmodul (G') von weniger als 1000 $dyn/cm^2$ bei einer Temperatur von 240°C, wie durch dynamische mechanische Spektroskopiemessungen bei einer Temperaturerhöhungsrate von 3°C/min und einer Scherrate von 1 rad/s unter Verwendung einer parallelen Plattengeometrie (unter Stickstoff) gemessen, und einer komplexen Viskosität (Eta*) von weniger als 2000 Poise, wie entsprechend den dynamischen mechanischen Spektroskopiemessungen unter Verwendung von Scherraten-Sweeps bei 280°C und einer Scherrate von 1 rad/s unter Verwendung einer parallelen Plattengeometrie (unter Stickstoff) gemessen, wobei jede Trägerschicht einen Gangunterschied, der durch Einsetzen des geformten Trägersubstrats zwischen gekreuzte Polarisatoren und Viertelwellenlängenplatten (entgegengesetzt orientiert) gemessen wird, von weniger als 25 nm pro 0,6 mm Substratdicke (gemessen unter Verwendung von Licht aus einem Laser mit einer Wellenlänge von 633 nm) und ein Wasserabsorptionsvermögen von weniger als 0,5%, wie gemäß ASTM D570 gemessen, hat, wobei der Träger eine Datendichte von wenigstens 7,5 Gigabytes pro Trägerschicht oder 0,17 Gigabytes pro $cm^2$ ($GB/cm^2$) der Substratoberfläche oder Schicht und einen solchen Replikationsgrad hat, dass die mittlere Pit-Tiefe dem 1/4- bis 1/8-fachen von $\lambda/\nu$ entspricht, worin $\lambda$ die Wellenlänge eines blauen Leselasers ist, der für die Pit-Tiefenauswertung verwendet wird, und von 380 bis 410 nm reicht und $\nu$ der Brechungsindex des Trägers ist.

**2.** Datenträger nach Anspruch 1 mit einer Datendichte von wenigstens 0,2 $GB/cm^2$ pro Lage.

**3.** Datenträger nach Anspruch 1, wobei die Lichtdurchlässigkeit des Trägers wenigstens 80% bei einer Wellenlänge von größer als 390 nm bis 700 nm ist.

**4.** Datenträger nach Anspruch 1, wobei die Pit-Tiefe dem 1/4- bis 1/6-fachen von $\lambda/\nu$ entspricht.

**5.** Wiederbeschreibbarer optischer Datenträger mit hoher Datendichte, der eine Datendichte von wenigstens 0,05 $GB/cm^2$ hat, wobei wenigstens 75% Replikation erreicht werden, wie durch eine Kombination der Spurhöhe und des linken und rechten Seitenwandwinkel gemessen, und wobei der Träger einen Gangunterschied von weniger als 25 nm pro 0,6 mm Substratdicke und ein Wasserabsorptionsvermögen von weniger als 0,5%, wie gemäß ASTM D570 gemessen, hat.

**6.** Datenträger nach Anspruch 5 mit einer Datendichte von wenigstens 0,08 $GB/cm^2$.

**7.** Datenträger nach Anspruch 5, wobei die Lichtdurchlässigkeit des Trägers wenigstens 80% bei einer Wellenlänge von größer als 390 nm bis 700 nm ist.

**8.** Datenträger nach Anspruch 1, wobei der Gangunterschied weniger als 20 nm ist.

**9.** Optischer Datenträger nach Anspruch 1, wobei das Blockcopolymer wenigstens zwei unterschiedliche Blöcke aus hydriertem polymerisiertem aromatischem Vinylmonomer, worauf hierin als Block aus hydriertem aromatischen Vinylpolymer Bezug genommen wird, und wenigstens einen Block aus einem hydrierten polymerisierten Butadienmonomer, worauf hierin als Block aus hydriertem Butadienpolymer Bezug genommen wird, enthält, wobei das hydrierte Blockcopolymer charakterisiert ist durch:

1) einen Hydrierungsgrad, der so ist, dass jeder Block aus hydriertem aromatischen Vinylpolymer einen Hydrierungsgrad von größer als 90% hat und jeder Block aus hydriertem Butadienpolymer einen Hydrierungsgrad von größer als 95% hat, und
2a) ein Gewichtsverhältnis des 1,2- zu 1,4-Polybutadiengehaltes von größer als 20:80 oder
2b) einen Block aus hydrierten Butadienpolymer, der 120 Monomereinheiten oder weniger enthält.

**10.** Datenträger nach Anspruch 9, wobei das aromatische Vinylmonomer Styrol ist.

**11.** Datenträger nach Anspruch 9, wobei der Butadienpolymerblock ein Gewichtsverhältnis des 1,2- zu 1,4-Polybutadiengehaltes von größer als 25:75 hat.

**12.** Datenträger nach Anspruch 11, wobei das Gewichtsverhältnis des 1,2- zu 1,4-Polybutadiengehaltes größer als 30:70 ist.

**13.** Datenträger nach Anspruch 9, wobei das Blockcopolymer aus einem Vinylaromaten und einem konjugierten Dien

einen Block aus hydriertem Isoprenpolymer umfasst.

**14.** Datenträger nach Anspruch 1, wobei die Polymerzusammensetzung außerdem ein Copolymer eines cyclischen Olefins umfasst.

**15.** Datenträger nach Anspruch 1, wobei die Polymerzusammensetzung außerdem ein hydriertes durch ringöffnende Metathese hergestelltes Polymer umfasst.

**16.** Verfahren zur Herstellung des bespielten oder wiederbeschreibbaren optischen Datenträgers mit hoher Datendichte nach einem der Ansprüche 1 bis 15, umfassend Spritzpressen einer Polymerzusammensetzung wie in Anspruch 1 oder in einem der Ansprüche 9 bis 15 definiert in einen optischen Datenträger hoher Dichte.

**Revendications**

**1.** Disque support optique préenregistré à haute densité de données, comportant au moins une couche de disque obtenue à partir d'une composition de polymère qui comprend un copolymère à blocs, hydrogéné, de monomère vinyl-aromatique et de diène conjugué, lequel copolymère présente :

- une température de transition vitreuse Tg, mesurée par analyse enthalpique différentielle (AED) effectuée à 10 °C/min, supérieure à 110 °C,
- un module élastique G' à 240 °C, mesuré par spectroscopie mécanique dynamique pour une vitesse de variation de la température de 3 °C/min et une vitesse de cisaillement de 1 rad/s, avec un montage à plaques parallèles et sous azote, inférieur à 1000 dyn/$cm^2$,
- et une viscosité complexe $\eta^*$, mesurée par spectroscopie mécanique dynamique avec balayages en vitesse de cisaillement, à 280 °C et pour une vitesse de cisaillement de 1 rad/s, avec un montage à plaques parallèles et sous azote, inférieure à 2000 poises

et chaque couche de disque présentant

- un retard optique, mesuré sur un substrat de disque moulé placé entre des polariseurs croisés et des lames quart-d'onde orientées en opposition, avec de la lumière provenant d'un laser et présentant une longueur d'onde de 633 nm, inférieur à 25 nm par fraction de 0,6 mm d'épaisseur du substrat,
- et un taux d'absorption d'eau, mesuré selon la norme ASTM D-570, inférieur à 0,5 %,

et lequel disque présente une densité de données d'au moins 7,5 Go (giga-octets) par couche de disque ou d'au moins 0,17 Go par $cm^2$, par surface ou couche de substrat, et un taux de réplication tel que la profondeur moyenne des microcuvettes vaut du quart au huitième du rapport $\lambda/\nu$ où $\lambda$ représente la longueur d'onde du rayon laser bleu de lecture qui sert à évaluer la profondeur des microcuvettes, laquelle longueur d'onde vaut de 380 à 410 nm, et $\nu$ représente l'indice de réfraction du disque.

**2.** Disque conforme à la revendication 1, qui présente une densité de données d'au moins 0,2 Go/$cm^2$ par couche.

**3.** Disque conforme à la revendication 1, qui présente un taux de transmission de la lumière d'au moins 80 % pour une longueur d'onde de plus de 390 nm à 700 nm.

**4.** Disque conforme à la revendication 1, dans lequel la profondeur des microcuvettes vaut du quart au sixième du rapport $\lambda/\nu$.

**5.** Disque support optique réinscriptible à haute densité de données, présentant une densité de données d'au moins 0,05 Go/$cm^2$ et un taux de réplication, évalué par combinaison de la profondeur du sillon et des angles des parois latérales droite et gauche du sillon, d'au moins 75 %, lequel disque présente un retard optique inférieur à 25 nm par fraction de 0,6 mm d'épaisseur du substrat et un taux d'absorption d'eau, mesuré selon la norme ASTM D-570, inférieur à 0,5 %.

**6.** Disque conforme à la revendication 5, qui présente une densité de données d'au moins 0,08 Go/$cm^2$.

**7.** Disque conforme à la revendication 5, qui présente un taux de transmission de la lumière d'au moins 80 % pour

une longueur d'onde de plus de 390 nm à 700 nm.

**8.** Disque conforme à la revendication 1, dans lequel le retard optique est inférieur à 20 nm.

**9.** Disque support optique conforme à la revendication 1, dans lequel le copolymère à blocs comporte au moins deux blocs distincts de monomère vinyl-aromatique polymérisé, hydrogénés (appelés ici "blocs polymères poly(vinyl-aromatique) hydrogénés"), et au moins un bloc de monomère butadiène polymérisé, hydrogéné (appelé ici "bloc polybutadiène hydrogéné"), et ce copolymère à blocs hydrogéné est **caractérisé :**

1) **par** un degré d'hydrogénation tel que chacun des blocs polymères poly-(vinyl-aromatique) hydrogénés est hydrogéné à plus de 90 % et chacun des blocs polybutadiène hydrogénés est hydrogéné à plus de 95 %,
2) et a) par un rapport pondéral du poly(1,2-butadiène) au poly(1,4-butadiène) supérieur à 20/80,

b) ou par un bloc polybutadiène hydrogéné comportant au plus 120 motifs monomères.

**10.** Disque conforme à la revendication 9, dans lequel le monomère vinyl-aromatique est du styrène.

**11.** Disque conforme à la revendication 9, dans lequel, dans le bloc polybutadiène, le rapport pondéral du poly(1,2-butadiène) au poly(1,4-butadiène) vaut plus de 25/75.

**12.** Disque conforme à la revendication 11, dans lequel le rapport pondéral du poly(1,2-butadiène) au poly(1,4-butadiène) vaut plus de 30/70.

**13.** Disque conforme à la revendication 9, dans lequel le copolymère à blocs de monomère vinyl-aromatique et de diène conjugué comporte un bloc de polyisoprène hydrogéné.

**14.** Disque conforme à la revendication 1, dans lequel la composition de polymère comporte en outre un copolymère d'oléfine cyclique.

**15.** Disque conforme à la revendication 1, dans lequel la composition de polymère comporte en outre un copolymère formé par métathèse et ouverture de cycle et hydrogéné.

**16.** Procédé de fabrication d'un disque support optique à haute densité de données, préenregistré ou réinscriptible, conforme à l'une des revendications 1 à 15, lequel procédé comporte le fait de mouler par injection et compression une composition de polymère du type défini dans la revendication 1 ou dans l'une des revendications 9 à 15, pour en faire un disque support optique à haute densité.